# EUROPEAN PATENT SPECIFICATION

(11) **EP 3 027 062 B1**
(45) Date of publication and mention of the grant of the patent: **20.12.2017**
(21) Application number: 14731605.3
(22) Date of filing: 17.06.2014
(51) Int. Cl.: A23L 33/145, A23L 23/00, A23L 27/23

(54) **YEAST EXTRACT**
HEFEEXTRAKT
EXTRAIT DE LEVURE

(30) Priority: 20.06.2013 EP 13173043
(43) Date of publication of application: 08.06.2016
(73) Proprietor: DSM IP Assets B.V., 6411 TE Heerlen (NL)
(72) Inventor: BEELEN, VAN, Petrus Norbertus, NL-6100 AA Echt (NL); NOORDAM, Bertus, NL-6100 AA Echt (NL)
(74) Representative: DSM Intellectual Property
(86) International application number: PCT/EP2014/062656
(87) International publication number: WO 2014/202571

(56) References cited:
- WO-A1-03/051139
- US-B1- 6 495 184

## Description

### Field of the invention

The present invention relates to the production of a pumpable yeast extract and the product thereof.

### Background of the invention

Compositions comprising 5'-ribonucleotides are known for their flavour enhancing properties. They are capable of enhancing the savoury and delicious taste in certain types of food. This phenomenon is described as 'mouthfeel' or umami. The 5'-ribonucleotides are derived from RNA, usually from microorganisms such as yeast.

WO2005067734 discloses a process to produce a composition comprising between 25 and 55 wt% 5'-ribonucleotides (based on the sodium chloride free dry matter of the composition) where the process comprises subjecting a microorganism, in particular a yeast, to autolysis under conditions at which a substantial part of the RNA remains in a form degradable into 5'-ribonucleotides, then subjecting the autolysate to solid/liquid separation and recovering the RNA-containing cell wall fraction and finally converting the RNA in the recovered RNA-containing cell wall fraction into 5'-ribonucleotides.

WO2004067758 discloses a process to produce a composition comprising at least 55% w/w (on sodium chloride free dry matter weight) of 5'-ribonucleotides where the process comprises the steps of: (i) treating microbial cells to release the cell contents comprising RNA; (ii) separating the RNA present in the released cell content from other soluble cell material; and (iii) converting the separated RNA into 5'-ribonucleotides.

Yeast extracts comprising 5'-ribonucleotides are usually produced by a yeast extract manufacturer, such as DSM Food Specialties in Delft, The Netherlands. The final products are then transported to food producing companies that use the yeast extracts comprising 5'-ribonucleotides in various applications, such as the production of soups, sauces and the like. There is a great advantage to use liquid yeast extracts comprising 5'-ribonucleotides comprising a high yeast dry matter content as well as a high 5'-ribonucleotide content. The advantage of such liquid yeast extracts is that they can be dosed easily in the food production processes by pumping systems.

We have found that upon concentrating a liquid yeast extract comprising 5'-ribonucleotides to higher yeast dry matter concentrations, e.g. between 40-60 wt% and a high 5'-ribonucleotide content (between 10-70% based on the sodium chloride free dry matter of the composition), these yeast extracts behave more or less as a pumpable liquid at elevated temperatures (e.g. 50-100°C) that are used to concentrate the yeast extracts. However, upon cooling down the yeast extracts to lower temperatures, for instance between 0 and 40°C, the yeast extract comprising 5'-ribonucleotides lose these pumpable liquid properties and forms a gel-like, highly viscous composition, best compared with the consistency of peanut butter which prohibits their use in automatic dosing systems at the food manufacturer. It is however preferred to produce, transport and store the yeast extract at lower temperatures, since at the higher temperatures the 5'-ribonucleotides are not stable.

It is therefore an object of the present invention to provide a process whereby after cooling, the concentrated yeast extract comprising 5'-ribonucleotides still behaves like a pumpable liquid and therefore advantageously can be transported to and used by the food manufacturer in automatic dosing systems under ambient conditions.

### Definitions

**"Yeast"** is defined herein as a solid, paste or liquid composition comprising yeast cells. Examples of liquid compositions are a fermentation broth used for the production of yeast or cream yeast as used in the baking industry and which is a suspension of yeast cells. Cream yeast may have a yeast dry matter between 20-25% or even higher. Liquid compositions having other yeast dry matter contents may be used as well such as 6-20% or 14-18%. Examples of solid compositions are active dried yeast (ADY) or instant dried yeast (IDY) having yeast dry matter contents of at least 90%. An example of a paste like product is compressed yeast having a yeast dry matter between 30 and 40%.

**"Autolysis"** is defined herein as the enzymatic breakdown of yeast using endogenous yeast enzymes and optionally exogenous added enzymes. Autolysis may result in both a yeast autolysate and a yeast extract (see definitions below)

**"Hydrolysis"** is defined herein to the enzymatic breakdown of yeast using only exogenous enzymes. The endogenous yeast enzymes are first inactivated for instance by a heat shock. Hydrolysis may also result in both a yeast autolysate and a yeast extract (see definitions below).

**"Yeast autolysate"** is the concentrated, not extracted, partially soluble digest obtained from food-grade yeasts. Solubilization is accomplished by enzyme hydrolysis or autolysis of yeast cells. Yeast autolysate contains both soluble and insoluble components derived from the whole yeast cell (Food Chemical Codex).

**"Yeast extract**" comprises only the water soluble components of the yeast cell, the composition of which is primarily amino-acids, peptides, carbohydrates and salts. Yeast Extract is produced through the hydrolysis of peptide bonds by the naturally occurring enzymes present in edible yeast and/or or by the addition of food-grade enzymes (Food Chemical Codex), i.e. by autolysis or hydrolysis.

**"Viscosity"** is a measure of the resistance of a fluid to deformation under shear stress. It is commonly perceived as "thickness" or resistance to pouring. Viscosity describes a fluid's internal resistance to flow and may be thought of as a measure of fluid friction. Thus, water is "thin" having a low viscosity, while vegetable oil is "thick" having a high viscosity. The viscosity may be expressed as cP (centipoise) or mPa*s (milliPascal *sec) which are the same.

With the term "**5'-ribonucleotides**" it is herewith intended to refer to a mixture of 5'-GMP, 5'-CMP, 5'-UMP and further 5'-AMP and/or 5'-IMP, wherein the 5'-IMP in the mixture is obtained by partial or complete conversion of 5'-AMP into 5'-IMP. The term "5'-ribonucleotides" is herein intended to refer to either the free 5'-ribonucleotides or salts thereof. The weight percentage of 5'-ribonucleotides in the yeast extract (wt%) is based on the weight of the salt free dry matter of the composition and is calculated as disodium salt heptahydrate (2Na.7Aq) of 5'-ribonucelotide. Salt free does not mean that the composition of the invention cannot contain salt, but means that salt is excluded from the composition for the calculation of wt%.

**"Weight percentages"** are defined herein as follows:
- The yeast extract according to the invention comprises on the one hand "total dry matter" and on the other hand "water". The sum of the weight of the total dry matter and water is 100% by definition. For instance, a yeast extract may comprise 15 wt% water and 85% total dry matter.
- The "total dry matter" in the yeast extract comprises
   ∘ on the one hand "yeast dry matter" or "salt-free dry matter".
   ∘ on the other hand "non-yeast dry matter" such as (added) salt.
- The "yeast dry matter" or "salt-free dry matter" in the yeast extract may comprise amino acids, peptides, lipids, polysaccharides, 5'-ribonucleotides etcetera..
- The 5'-ribonucleotides are preferably expressed as a wt% percentage of the total yeast dry matter fraction in the yeast extract. A yeast extract may for instance comprise between 10 and 70 wt% 5'-ribonucleotides based on yeast dry matter.
- A yeast extract may therefore have the following composition:
   ∘ 60% water
   ∘ 40% total dry matter of which
      ▪ 8% salt (sodium chloride) = 20 wt% of the total dry matter
      ▪ 32% yeast dry matter of which = 80% of the total dry matter
         - 6% 5'ribonucleotides = 18,75% of the yeast dry matter (6/32).
         - 26% others such as amino acids, peptides, lipids, polysaccharides.

### Detailed description of the invention

In a first aspect the invention provides a process for the production of a yeast extract comprising the steps of bringing a yeast extract with a yeast dry matter content between 30 and 70 wt% and comprising between 10-70 wt% 5'-ribonucleotides based on the yeast dry matter to a temperature between 50 and 100°C and cooling the yeast extract obtained in step a) under shear conditions to a temperature between 0° and 40°C, wherein the yeast extract obtained after step b) has a viscosity of less than 50,00 cP at a temperature between 0° and 40°C. The advantage of the process of the invention is that by bringing the temperature of the yeast extract from a lower temperature to a temperature between 50 and 100°C, the consistency of the yeast extract changes from a peanut butter like paste to a peanut sauce like liquid and that the yeast extract keeps this consistency when the yeast extract is cooled by applying shear conditions during cooling. In the absence of the shear conditions the yeast extract, upon cooling, again obtains the consistency of a peanut butter like paste.

In a preferred embodiment of the process of the invention, the yeast extract may be concentrated prior to step b) and during or after step a), to a higher yeast dry matter content but not exceeding 70wt%. The yeast extract subjected to the shear cooling step b) has a yeast dry matter content of at least 30%, more preferably at least 35%, more preferably at least 40%, more preferably at least 45%, more preferably at least 50%, more preferably at least 55%, most preferably at least 60% and not exceeding 70%, more preferably not exceeding 65%. The yeast extract may be concentrated by any suitable means known in the art, preferably by evaporation under conditions of reduced pressure or vacuum, such as in a rotavapor. The yeast extract having the yeast dry matter content described herein before, may further comprise water or a combination of water and salt. The total dry matter content of the yeast extract may therefore be the same as the yeast dry matter in case the yeast extract further comprises water, or, in case salt is present, be the sum of the yeast dry matter and the salt.

The yeast extract in the process of the invention comprises between 10-70 wt% 5'-ribonucleotides based on the total yeast dry matter. Depending on the application of the yeast extract, for instance in food applications, the 5'-ribonucleotides content may be any value in the range mentioned.

The temperature in step a) is between 50-100°C, more preferably between 55-90°C, more preferably between 60-80°C and most preferably between 65 and 75°C. The temperature during the optional concentrating step described hereinbefore, is preferably the same as the temperature of step a) of process of the invention.

The yeast extract obtained after step b) preferably has a peanut sauce like consistency and preferably behaves like a pumpable liquid and may therefore be advantageously be transported to and used by the food manufacturer in automatic dosing systems under ambient conditions. The yeast extract obtained after step b) has a viscosity of less than 50,000 cP a temperature between 0° and 40°C, more preferably between 10 and 30°C, most preferably between 15 and 25°C. The yeast extract obtained after step b) has a constant viscosity, in other words, maintains this viscosity for a period between 0,5 - 3 years.

Preferably the viscosity of the concentrated yeast extract is less than 40,000 cP, more preferably less than 30,000 cP, more preferably less than 20,000 cP, more preferably less than 15,000 cP, more preferably less than 10,000 cP, more preferably less than 5,000 cP, more preferably less than 3,000 cP.

The viscosity of the concentrated yeast extract may be a function of the temperature (the viscosity increases at lower temperatures), the dry matter content (the viscosity increases at increasing dry matter content) as well as the 5'-ribonucleotide content of the concentrated yeast extract (the viscosity increases at higher 5'-ribonucleotide content of the concentrated yeast extract).

The yeast extracts used in the process of the invention prior to step (a)and which have a peanut butter like consistency, may have a viscosity of at least 110,000 cP and higher at a temperature between 0° and 40°C, more preferably between 10 and 30°C, most preferably between 15 and 25°C. The yeast extract having this high viscosity value may be regarded as being un-pumpable.

In a preferred embodiment of the process of the invention, the yeast extract obtained prior to step (b), is cooled down in step (b) to a temperature between 0° and 40°C while mechanically stirring the concentrated yeast extract. Preferably the yeast extract is cooled down to a temperature between 10 and 40°C, more preferably between 10 and 30°C more preferably between 15 and 25°C.

In a second aspect, the invention provides a yeast extract obtainable by the process of the first aspect of the invention, characterized in that the yeast extract comprises
1. Between 30 and 70 wt% yeast dry matter based on the total weight of the yeast extract; and
2. Between 10 and 70% wt% 5'-ribonucleotides based on the yeast dry matter; and
3. Between 0 and 40 wt % salt based on total dry matter of the yeast extract;
4. and whereby the yeast extract is having a (constant) viscosity of less than 50,000 cP at a temperature between 0° and 40°C for a period between 1 - 3 year.

### EXAMPLES

### Example 1

A yeast extract containing 15% salt (sodium chloride) and 15% 5'-ribonucleotides (based on salt free dry matter of the yeast extract) was concentrated using a rotavapor from 40.2% total dry matter to 75.2% total dry matter (equal to 60% yeast dry matter and 15.2% salt). During evaporation the water bath was heated to 70°C and the vacuum was controlled at 300 mbar. Finally 4 kg concentrated yeast extract was collected (still very fluid at 70°C).

The 4 kg sample was poured into 2 plastic beakers (both 20 cm in diameter), after which the warm concentrated yeast extract were cooled down by the surrounding air. One beaker was directly from the start mixed while cooling; the other was not mixed while cooling.

The mixing was performed by a Rushton-type mixer equipped with a circular blade with a diameter of 10 cm. At the end of the blade were 10 vertically positioned smaller blades of 16x20 mm. The mixing produced shear forces in the fluid during the cooling process. Mixing was continued for 6 hours and during cooling down the stirring speed was reduced from 150 to 30 rpm. During these 6 hours of cooling, the product temperature decreased from 70°C to 22.1°C.

Mixing was continued overnight for another 18 hours. The next day both portions (shear cooled yeast extract and the not-mixed cooled yeast extract) were sampled and viscosity was measured at 22°C using a Brookfield DV-II+ Pro viscometer equipped with a SC-29 spindle which was inserted in the sample manually. The stirring speed of the spindle was 10 rpm, resulting in a shear rate of 0.25 sec-1.

The not-mixed cooled yeast extract showed the consistency of peanut butter having a viscosity as measured with the Brookfield method of approximately 110,000 cP,

Th shear cooled yeast extract showed the consistency comparable to a peanut sauce with a viscosity as measured with the Brookfield method of approximately 31,000 cP. The viscosity of the shear cooled yeast extract was stored at room temperature and measured during a time period of 12 months with 2 months intervals. The viscosity of the yeast extract was constant and showed an average viscosity of 31,000 cP when measured in the Brookfield viscosimeter as described above.

## Claims

1. A process for the production of a yeast extract comprising the steps of
a. bringing a yeast extract with a yeast dry matter content between 30 and 70 wt% and comprising between 10-70 wt% 5'-ribonucleotides based on the yeast dry matter to a temperature between 50 and 100°C; and
b. cooling the yeast extract obtained in step a) under shear conditions to a temperature between 0° and 40°C, wherein the yeast extract obtained after step b) has a viscosity of less than 50,000 cP at a temperature between 0° and 40°C.

2. The process according to claim 1 wherein prior to step b) and during or after step a), the yeast extract is concentrated at the temperature of step a) to a yeast dry matter content not exceeding 70wt%.

3. The process according to claim 1 wherein the viscosity of the yeast extract after step (b) is stable for a period between 0,5 - 3 years at a temperature between 0° and 40°C.

4. A yeast extract obtainable by the process of claim 1-3, **characterized in that** the yeast extract is comprising
a. Between 30 and 70 wt% yeast dry matter based on the total weight of the yeast extract; and
b. Between 10 and 70% wt% 5'-ribonucleotides based on the yeast dry matter; and
c. Between 0 and 40 wt % salt based on total dry matter of the yeast extract;
d. and whereby the yeast extract is having a (constant) viscosity of less than 50,000 cP at a temperature between 0° and 40°C for a period between 1 - 3 year.

## Patentansprüche

1. Verfahren zur Herstellung eines Hefeextrakts, umfassend die folgenden Schritte:
a. Bringen eines Hefeextrakts mit einem Hefetrockenmassegehalt von zwischen 30 und 70 Gew.-%, der 10-70 Gew.-% 5'-Ribonukleotide in Bezug auf die Hefetrockenmasse umfasst, auf eine Temperatur von zwischen 50 und 100°C; und
b. Abkühlen des in Schritt a) erhaltenen Hefeextrakts unter Scherbedingungen auf eine Temperatur zwischen 0° und 40°C, wobei der nach Schritt b) erhaltene Hefeextrakt eine Viskosität von weniger als 50 000 cP bei einer Temperatur zwischen 0° und 40°C aufweist.

2. Verfahren nach Anspruch 1, wobei der Hefeextrakt vor Schritt b) und während oder nach Schritt a) bei der Temperatur von Schritt a) auf einen Hefetrockenmassegehalt, der nicht 70 Gew.-% überschreitet, aufkonzentriert wird.

3. Verfahren nach Anspruch 1, wobei die Viskosität des Hefeextrakts nach Schritt (b) bei einer Temperatur zwischen 0° und 40°C über einen Zeitraum zwischen 0,5 - 3 Jahre stabil bleibt.

4. Hefeextrakt, erhältlich nach dem Verfahren nach Anspruch 1-3, **dadurch gekennzeichnet, dass** der Hefeextrakt Folgendes umfasst:
a. zwischen 30 und 70 Gew.-% Hefetrockenmasse in Bezug auf das Gesamtgewicht des Hefeextrakts; und
b. zwischen 10 und 70 Gew.-% 5'-Ribonukleotide in Bezug auf die Hefetrockenmasse; und
c. zwischen 0 und 40 Gew.-% Salz in Bezug auf die Gesamttrockenmasse des Hefeextrakts;
d. und wobei der Hefeextrakt bei einer Temperatur zwischen 0° und 40°C über einen Zeitraum zwischen 1 - 3 Jahr eine (konstante) Viskosität von weniger als 50 000 cP aufweist.

## Revendications

1. Procédé de production d'un extrait de levure, comprenant les étapes consistant à
a. amener un extrait de levure ayant une teneur en matière sèche de levure comprise entre 30 et 70% en poids et comprenant 10-70% en poids de 5'-ribonucléotides sur la base de la matière sèche de levure, à une température comprise entre 50 et 100°C ; et
b. refroidir l'extrait de levure obtenu dans l'étape a) dans des conditions de cisaillement jusqu'à une température comprise entre 0° et 40°C, où l'extrait de levure obtenu après l'étape b) possède une viscosité inférieure à 50 000 cP à une température comprise entre 0° et 40°C.

2. Procédé selon la revendication 1, dans lequel, avant l'étape b) et pendant ou après l'étape a), l'extrait de levure est concentré à la température de l'étape a) jusqu'à une teneur en matière sèche de levure n'excédant pas 70% en poids.

3. Procédé selon la revendication 1, dans lequel la viscosité de l'extrait de levure après l'étape b) est stable pendant une période de 0,5-3 ans à une température comprise entre 0° et 40°C.

4. Extrait de levure pouvant être obtenu par le procédé selon les revendications 1-3, **caractérisé en ce que** l'extrait de levure comprend
a. entre 30 et 70% en poids de matière sèche de levure, sur la base du poids total de l'extrait de levure ; et
b. entre 10 et 70% en poids de 5'-ribonucléotides, sur la base de la matière sèche de levure ; et
c. entre 0 et 40% en poids de sel, sur la base de la matière sèche totale de l'extrait de levure ;
d. et où l'extrait de levure possède une viscosité (constante) inférieure à 50 000 cP à une température comprise entre 0° et 40°C pendant une période de 1-3 ans.
